# EUROPÄISCHE PATENTANMELDUNG

(11) **EP 4 763 675 A1**
(43) Veröffentlichungstag der Anmeldung: **24.06.2026**
(21) Anmeldenummer: 24220974.0
(22) Anmeldetag: 18.12.2024
(51) Int. Cl.: B62D 25/02, B62D 29/00, B62D 25/04

(54) **VERFAHREN ZUR HERSTELLUNG EINER SEITENWANDVERSTÄRKUNG SOWIE SEITENWANDVERSTÄRKUNG**

(71) Anmelder: ThyssenKrupp Steel Europe AG, 47166 Duisburg (DE)
(72) Erfinder: Banik, Janko, 47166 Duisburg (DE); Breidenbach, Andreas, 47166 Duisburg (DE)
(74) Vertreter: ThyssenKrupp Steel Europe AG

(57) **Zusammenfassung**

Die Erfindung betrifft ein Verfahren zur Herstellung einer Seitenwandverstärkung (10, 10', 10") nach Anspruch 1 sowie eine Seitenwandverstärkung (10, 10', 10") nach Anspruch 11.

## Beschreibung

Die Erfindung betrifft ein Verfahren zur Herstellung einer Seitenwandverstärkung sowie eine entsprechende Seitenwandverstärkung.

Die passive Fahrzeugsicherheit stellt ein entscheidendes Bewertungskriterium für Fahrzeuge dar. Sie wird maßgeblich durch das Strukturverhalten der Karosserie im Crashfall beeinflusst. Je nach Lastfall ergeben sich lokal stark unterschiedliche Anforderungen an die Strukturkomponenten. Bei der Gestaltung entsprechender Lösungsmöglichkeiten ist außerdem stets das Ziel des Strukturleichtbaus und somit eines möglichst geringen Materialeinsatzes zu beachten.

Eine Alternative zu der konventionellen Bauweise, in der Einzelbauteile nach dem Umformen im Rohbau gefügt werden, ist die Anwendung einer Seitenwandverstärkung, die aus einem Tailored Product, beispielsweise aus einer Tailored Welded Blank-Platine gefertigt wird. Eine Tailored Welded Blank-Platine besteht aus Werkstoffen mit verschiedener chemischer Zusammensetzung und/oder unterschiedlichen Materialstärken. Eine Seitenwandverstärkung (door ring) umfasst die Bauteile Schweller, A-Säule, Dachrahmen und die B-Säule, wobei hierunter auch sogenannte "double" door ring Lösungen als Erweiterung fallen, die darüber hinaus auch eine C-Säule aufweisen.

Eine weitere Alternative bieten light commercial vehicles (LCV), welche zwischen der B-Säule und der abschließenden Säule im Heck des Fahrzeuges mindestens eine weitere Säule zur Verstärkung des Lastraums aufweisen können.

Die Tailored Welded Blank-Platine weist hohe Abmessungen auf, die hohe Anforderungen an die Fertigung der Platine, die Logistik und die Umformung und den Fertigbeschnitt stellen. Anlagen, Vorrichtungen und Werkzeuge in der Prozesskette müssen auf die hohen Abmessungen ausgelegt sein. Dies erfordert hohe Investitionen, die sich nur bei hohen Stückzahlen amortisieren.

Ein weiterer wichtiger Aspekt ist die Herstellbarkeit des Bauteils. Die Integration des oberen Längsträgers kann abhängig von der Bauweise der Karosserie eine umformtechnische Herausforderung darstellen, weil in der Anbindung zur A-Säule hohe Umformgrade entstehen die mit der Warmumformung nicht herstellbar sind. In diesem Falle ist es hilfreich einen Ausschnitt vorzusehen, der nach der Umformung mit einem Zusatzbauteil geschlossen wird. Darüber hinaus ist die umformtechnische Herstellbarkeit bei einer vollständig geschlossenen door ring-Struktur eingeschränkt. Hierdurch reduzieren sich die Designfreiheitsgrade für Radien und geschlossene Bereiche und es werden Materialzugaben an einer Ausgangsplatine zum Erreichen der umformtechnische Machbarkeit erforderlich. Seitenwände für Kraftfahrzeuge, insbesondere PKW, umfassen heutzutage mindestens eine Seitenwandverstärkung, wobei zum Teil eine innere und eine äußere Seitenwandverstärkung zum Einsatz kommen können, und eine die Seitenwandverstärkung(en) nach außen abschließende Außenhaut, wobei die äußere Seitenwandverstärkung durch Warmpressen aus einer Tailored Welded Blank-Platine hergestellt werden kann, vgl. beispielsweise WO 2022/064331 A1.

Hiervon ausgehend ist es Aufgabe der vorliegenden Erfindung, ein Verfahren zur Herstellung einer Seitenwandverstärkung anzugeben, mit welchem die Wirtschaftlichkeit des Fertigungsprozesses verbessert werden kann, insbesondere auf hohe Investitionen für Anlagen mit hohen Abmessungen verzichtet werden kann.

Die aufgezeigte Aufgabe wird gelöst durch ein Verfahren zur Herstellung einer Seitenwandverstärkung umfassend folgende Schritte:
- Bereitstellen mindestens eines ersten Bauteils, welches aus einem ersten Blech oder aus einem ersten maßgeschneiderten Halbzeug mit unterschiedlicher Stahlzusammensetzung, unterschiedlicher Oberflächenbeschichtung und/oder unterschiedlicher Dicke, warmumgeformt worden ist und mindestens eine A-Säule unten und einen Schweller für die Seitenwandverstärkung bereitstellt;
- Bereitstellen mindestens eines zweiten Bauteils, welches aus einem zweiten Blech oder aus einem zweiten maßgeschneiderten Halbzeug mit unterschiedlicher Stahlzusammensetzung, unterschiedlicher Oberflächenbeschichtung und/oder unterschiedlicher Dicke, warmumgeformt worden ist und mindestens eine A-Säule oben, einen Dachträger und eine B-Säule für die Seitenwandverstärkung bereitstellt;
- Verbinden der mindestens zwei Bauteile zur Erzeugung der Seitenwandverstärkung.

Zur Optimierung des Fertigungsprozesses und zur Verbesserung der Wirtschaftlichkeit weist die Herstellung einer "geteilten" Seitenwandverstärkung viele Vorteile auf. Die Seitenwandverstärkung wird aus mindestens zwei Bauteilen gefertigt, somit miteinander verbunden. Die einzelnen Bauteile werden entweder aus Blechen oder aus mindestens einem Blech und mindestens einem maßgeschneiderten Halbzeug oder aus maßgeschneiderten Halbzeugen warmumgeformt. Bleche sind im Sinne der Erfindung monolithische Platinenzuschnitte. Die maßgeschneiderten Halbzeuge sind im Sinne der Erfindung sind tailored products-Platinenzuschnitte, welche aus tailored welded blanks, tailored patched blanks und/oder aber auch tailored rolled blanks gebildet sind, mithin unterschiedliche Stahlzusammensetzungen, unterschiedliche Oberflächenbeschichtungen und/oder unterschiedliche Dicken aufweisen können. Bei der Oberflächenbeschichtung muss nicht zwangsläufig die chemische Zusammensetzung unterschiedlich sein, sondern es kann mithin auch im Auflagengewicht variieren, somit in der Auflage (Schichtdicke) unterschiedlich ausgeführt sein.

Die tailored welded blank Ausführung kann zum einen klassisch beispielsweise mittels Laserstrahlschweißen der (Einzel-)Platinen im Stumpfstoß mit oder ohne Entschichten sowie optional mit Einsatz von Zusatzdraht gefügt werden, vgl. beispielhaft CN 112 593 153 A, EP 3 815 837 A1 und WO 2013/013676 A1. Zum anderen kann das tailored welded blank auch durch die sogenannte "Overlapp"-Technologie ausgeführt sein, wobei der Fügebereich der (Einzel-)Platinen überlappt und dann beispielsweise mittels Widerstands-Punktschweißen oder Laserstrahlschweißen gefügt werden kann, vgl. beispielhaft EP 2 056 979 B1.

Zum Verbinden der Bauteile zur Erzeugung der Seitenwandverstärkung können Fügeverfahren wie zum Beispiel Widerstandspunktschweißen, Schmelzschweißverfahren wie MIG/MAG oder Laserstrahlschweißen, aber auch Kleben oder mechanisches Fügen sowie auch Kombinationen aus diesen Verfahren zum Einsatz kommen.

Der Vorteil dieser Lösung besteht u.a. in der Anwendbarkeit bisher vorhandener Warmumformanlagen, da die Gesamtdimensionen der gefertigten Bauteile geringer im Vergleich zu vollständig warmumgeformten Seitenwandverstärkungen sind. Letztere benötigen größer dimensionierte Anlagen und damit verbunden sind höhere Energieverbräuche und höhere Investitionskosten. Eine Warmumformanlage umfasst oder besteht aus mindestens einem Ofen und mindestens einer Presse.

Mithin ist die Erzeugung einer Seitenwandverstärkung umformtechnisch durch eine Einzelbauteilfertigung deutlich einfacher im Vergleich zur komplexen Fertigung aus einer Einzelplatine, wobei es dadurch nicht mehr zu einer hohen Ausdünnung an den Verbindungsradien vom Schweller zu den Säulen kommen kann, so dass auch ein höherer Freiheitsgrad hinsichtlich der Bauteilkomplexität der gesamten Seitenwandverstärkung durch eine "Teilung" der Einzelbauteile möglich ist.

Des Weiteren kann die Stapeltiefe der Einzelbauteile erhöht und der Logistikaufwand im Vergleich zur vollständig umgeformten Seitenwandverstärkung reduziert werden, so dass optimierte Transport- und Lagerbedingungen vorliegen. Durch vorgeschlagene Teilung der Seitenwandverstärkung besteht die Möglichkeit Plattformlösungen mit vereinfachten Bauteilen darzustellen und mit einer gleichen Bodenstruktur verschiedene Karosserievarianten zu erzeugen.

Auswahl und Kombination von unterschiedlichen Stahlzusammensetzungen, unterschiedlichen Oberflächenbeschichtungen und/oder unterschiedlichen Dicken, hohe Zugfestigkeiten und Bruchdehnungen können in einem Halbzeug vereint werden, welches ein hohes Potential zur Gewichtsreduktion der warmumgeformten Bauteile und damit der "finalen" Seitenwandverstärkung bieten, so dass dafür geeignete maßgeschneiderte Halbzeuge bereitgestellt werden können.

Gemäß einer Ausgestaltung kann das erste Blech oder das erste maßgeschneiderte Halbzeug in mindestens einem Teilabschnitt der bereitzustellenden A-Säule unten eine Stahlzusammensetzung umfassen, welche im warmumgeformten Zustand eine Zugfestigkeit von größer 950 bis 2200 MPa aufweist. Die Zugfestigkeit in diesem Teilabschnitt kann entweder zwischen größer 950 bis 1300 MPa oder zwischen größer 1300 und 1700 MPa oder zwischen größer 1700 bis 2200 MPa betragen. Die Dicke des ersten Blechs oder des ersten Halbzeugs in diesem mindestens einen Teilabschnitt kann zwischen 0,5 und 3,5 mm betragen. Die Dicke kann insbesondere mindestens 0,7 mm, vorzugsweise mindestens 1,0 mm, bevorzugt mindestens 1,5 mm betragen. Die Dicke kann insbesondere maximal 3,2 mm, vorzugsweise maximal 3,0 mm, bevorzugt maximal 2,5 mm betragen.

Gemäß einer Ausgestaltung kann das erste Blech oder das erste maßgeschneiderte Halbzeug in mindestens einem Teilabschnitt des bereitzustellenden Schwellers eine Stahlzusammensetzung umfassen, welche im warmumgeformten Zustand eine Zugfestigkeit von größer 1300 bis 2200 MPa aufweist. Die Zugfestigkeit in diesem Teilabschnitt kann entweder zwischen größer 1300 bis 1700 MPa oder zwischen größer 1700 bis 2200 MPa betragen. Die Dicke des ersten Blechs oder des ersten Halbzeugs in diesem mindestens einen Teilabschnitt kann zwischen 0,8 und 2,2 mm betragen. Die Dicke kann insbesondere mindestens 0,9 mm, vorzugsweise mindestens 1,1 mm, bevorzugt mindestens 1,3 mm betragen. Die Dicke kann insbesondere maximal 2,0 mm, vorzugsweise maximal 1,8 mm, bevorzugt maximal 1,6 mm betragen.

Vorzugsweise kann das erste maßgeschneiderte Halbzeug ein tailored welded blank sein, mit einer ersten Platine, welche im Bereich des zu erzeugenden Schwellers platziert wird und aus einer Stahlzusammensetzung besteht, welche im warmumgeformten Zustand eine Zugfestigkeit zwischen größer 1300 und 2200 MPa aufweist, und mit mindestens einer zweiten Platine, welche im Bereich der zu erzeugenden A-Säule unten platziert wird und aus einer Stahlzusammensetzung besteht, welche im warmumgeformten Zustand eine Zugfestigkeit zwischen größer 950 und 2200 MPa aufweist. Die beiden Platinen können zur Bereitstellung des ersten Halbzeugs im Stumpfstoß oder überlappend miteinander verbunden sein. Bevorzugt können die mindestens zwei Platinen aus einer vergleichbaren Stahlzusammensetzung bestehen, jedoch in ihrer Dicke unterschiedlich ausgeführt sein. Besonders bevorzugt ist die zweite Platine dicker als die erste Platine ausgebildet ist. Die erste und/oder zweite Platine kann als tailored rolled Platine im ersten maßgeschneiderten Halbzeug ausgeführt sein.

Gemäß einer Ausgestaltung kann das zweite Blech oder das zweite maßgeschneiderte Halbzeug in mindestens einem Teilabschnitt der bereitzustellenden A-Säule oben und des bereitzustellenden Dachträgers eine Stahlzusammensetzung umfassen, welche im warmumgeformten Zustand eine Zugfestigkeit von größer 1300 bis 2200 MPa aufweist. Die Zugfestigkeit kann in diesem Teilabschnitt entweder zwischen größer 1300 bis 1700 MPa oder zwischen größer 1700 bis 2200 MPa betragen. Die Dicke des zweiten Blechs oder des zweiten Halbzeugs in diesem mindestens einen Teilabschnitt kann zwischen 0,8 und 2,2 mm betragen. Die Dicke kann insbesondere mindestens 0,9 mm, vorzugsweise mindestens 1,1 mm, bevorzugt mindestens 1,3 mm betragen. Die Dicke kann insbesondere maximal 2,0 mm, vorzugsweise maximal 1,8 mm, bevorzugt maximal 1,6 mm betragen.

Gemäß einer Ausgestaltung kann das zweite Blech oder das zweite maßgeschneiderte Halbzeug in mindestens einem Teilabschnitt der bereitzustellenden B-Säule eine Stahlzusammensetzung umfassen, welche im warmumgeformten Zustand eine Zugfestigkeit von größer 950 bis 2200 MPa aufweist. Die Zugfestigkeit kann in diesem Teilabschnitt entweder zwischen größer 950 bis 1300 MPa oder zwischen größer 1300 bis 1700 MPa oder zwischen größer 1700 bis 2200 MPa betragen. Die Dicke des zweiten Blechs oder des zweiten Halbzeugs in diesem mindestens einen Teilabschnitt kann zwischen 0,5 und 3,5 mm betragen. Die Dicke kann insbesondere mindestens 0,7 mm, vorzugsweise mindestens 1,0 mm, bevorzugt mindestens 1,2 mm betragen. Die Dicke kann insbesondere maximal 3,0 mm, vorzugsweise maximal 2,6 mm, bevorzugt maximal 2,2 mm betragen.

Gemäß einer weiteren Ausgestaltung kann das zweite Blech oder das zweite maßgeschneiderte Halbzeug in mindestens einem Teilabschnitt einer bereitzustellenden C-Säule eine Stahlzusammensetzung umfassen, welche im warmumgeformten Zustand eine Zugfestigkeit von größer 450 bis 2200 MPa aufweist. Die Zugfestigkeit kann in diesem Teilabschnitt entweder zwischen größer 450 bis 800 MPa oder zwischen 950 bis 1300 MPa oder zwischen größer 1300 bis 1700 MPa oder zwischen größer 1700 bis 2200 MPa betragen. Die Dicke des zweiten Blecxhs oder des zweiten Halbzeugs in diesem mindestens einen Teilabschnitt kann zwischen 0,5 und 3,5 mm betragen. Die Dicke kann insbesondere mindestens 0,7 mm, vorzugsweise mindestens 1,0 mm, bevorzugt mindestens 1,2 mm betragen. Die Dicke kann insbesondere maximal 3,0 mm, vorzugsweise maximal 2,6 mm, bevorzugt maximal 2,2 mm betragen.

Vorzugsweise kann das zweite maßgeschneiderte Halbzeug ein tailored welded blank sein, mit einer ersten Platine, welche im Bereich der zu erzeugenden A-Säule oben und des zu erzeugenden Dachträgers platziert wird und aus einer Stahlzusammensetzung besteht, welche im warmumgeformten Zustand eine Zugfestigkeit zwischen größer 950 und 2200 MPa aufweist, und mit mindestens einer zweiten Platine, welche im Bereich der zu erzeugenden B-Säule platziert wird und aus einer Stahlzusammensetzung besteht, welche im warmumgeformten Zustand eine Zugfestigkeit zwischen größer 950 und 2200 MPa aufweist, und optional mit mindestens einer dritten Platine, welche im Bereich der zu erzeugenden C-Säule platziert wird und aus einer Stahlzusammensetzung besteht, welche im warmumgeformten Zustand eine Zugfestigkeit zwischen größer 450 und 2200 MPa aufweist. Die Platinen können zur Bereitstellung des zweiten Halbzeugs im Stumpfstoß oder überlappend miteinander verbunden sein. Bevorzugt können die Platinen aus einer vergleichbaren Stahlzusammensetzung bestehen, jedoch in ihrer Dicke unterschiedlich ausgeführt sein. Besonders bevorzugt ist die mindestens zweite Platine dicker als die erste Platine ausgebildet. Die erste, die zweite und/oder die optionale dritte Platine kann als tailored rolled Platine im zweiten maßgeschneiderten Halbzeug ausgeführt sein.

Während der Warmumformung des zweiten Blechs oder des zweiten maßgeschneiderten Halbzeugs kann zumindest im Bereich im unteren Abschnitt der zu erzeugenden B-Säule, somit im B-Säulenfuß im zweiten Bauteil ein sogenanntes "tailored tempering", vgl. beispielhaft EP 1 888 794 B1 und EP 2 012 948 B1, durchgeführt werden, um in diesem Abschnitt eine im Vergleich zum restlichen Teil der zu erzeugenden B-Säule geringere Zugfestigkeit einzustellen. Dieser Abschnitt mit einer geringerer Zugfestigkeit kann alternativ auch nach der Warmumformung durch beispielsweise "Anlassen" oder vor der Warmumformung durch Vermeidung einer Temperierung oberhalb von Austenit durch beispielweise "Kaschieren" erzeugt werden. Alternativ können Temperiereinheiten wie thermisches Inline Printen (WO 2017/129601 A1), Temperbox (DE 10 2012 016 075 A1) oder Temperierkörper (WO 2019/106083 A1) für das Einstellen partieller Weichbereiche eingesetzt werden. Alle genannten Technologien sind der Fachwelt bekannt.

Das zweite Bauteil kann mithin im B-Säulenfuß eine Zugfestigkeit von maximal 1500 MPa, insbesondere maximal 1250 MPa, vorzugsweise maximal 1000 MPa, bevorzugt maximal 800 MPa aufweisen, wobei eine Mindestzugfestigkeit von 200 MPa, insbesondere mindestens 300 MPa, vorzugsweise mindestens 380 MPa vorliegt.

Gemäß einer Ausgestaltung können das erste Bauteil aus einem ersten Blech oder aus einem ersten maßgeschneiderten Halbzeug mit unterschiedlicher Stahlzusammensetzung, unterschiedlicher Oberflächenbeschichtung und/oder unterschiedlicher Dicke, warmumgeformt worden sein, welches neben der A-Säule unten und dem Schweller zusätzlich einen Teilabschnitt einer B-Säule als B-Säule unten für die Seitenwandverstärkung bereitstellt und das zweite Bauteil aus einem zweiten Blech oder aus einem zweiten maßgeschneiderten Halbzeug mit unterschiedlicher Stahlzusammensetzung, unterschiedlicher Oberflächenbeschichtung und/oder unterschiedlicher Dicke, warmumgeformt worden sein, welches die A-Säule oben, den Dachträger und einen Teilabschnitt einer B-Säule als B-Säule oben für die Seitenwandverstärkung bereitstellt, wobei sich durch das Verbinden der beiden Bauteile der B-Säule unten des ersten Bauteils mit der B-Säule oben des zweiten Bauteils eine B-Säule in der Seitenwandverstärkung ergibt.

Gemäß einer weiteren Ausgestaltung können das erste Bauteil aus einem ersten Blech oder aus einem ersten maßgeschneiderten Halbzeug mit unterschiedlicher Stahlzusammensetzung, unterschiedlicher Oberflächenbeschichtung und/oder unterschiedlicher Dicke, warmumgeformt worden sein, welches neben der A-Säule unten, dem Schweller, einem optionalen Teilabschnitt einer B-Säule als B-Säule unten zusätzlich einen Teilabschnitt einer C-Säule als C-Säule unten für die Seitenwandverstärkung bereitstellt und das zweite Bauteil aus einem zweiten Blech oder aus einem zweiten maßgeschneiderten Halbzeug mit unterschiedlicher Stahlzusammensetzung, unterschiedlicher Oberflächenbeschichtung und/oder unterschiedlicher Dicke, warmumgeformt worden sein, welches die A-Säule oben, den Dachträger, entweder die B-Säule oder einen Teilabschnitt einer B-Säule als B-Säule oben zusätzlich einen Teilabschnitt der C-Säule oben für die Seitenwandverstärkung bereitstellt, wobei sich durch das Verbinden der beiden Bauteile neben der optionalen Ausführung der B-Säule unten des ersten Bauteils mit der B-Säule oben des zweiten Bauteils zu einer B-Säule zusätzlich der C-Säule unten des ersten Bauteils mit der C-Säule oben des zweiten Bauteils zu einer C-Säule in der Seitenwandverstärkung ergibt.

Das vorzugsweise aus einem tailored welded blank gebildete erste maßgeschneiderte Halbzeug, welches die mindestens zwei vorgenannten Platinen zur Erzeugung des Schwellers und der A-Säule unten aufweist, kann zusätzlich eine dritte Platine und/oder vierte Platine umfassen, welche im Bereich des zu erzeugenden Teilabschnitts der B-Säule als B-Säule unten und/oder im Bereich des zu erzeugenden Teilabschnitts der C-Säule als C-Säule unten platziert wird und aus einer Stahlzusammensetzung besteht, welche im warmumgeformten Zustand eine Zugfestigkeit zwischen 200 und 1500 MPa aufweist, wobei die Zugfestigkeit insbesondere maximal 1250 MPa, vorzugsweise maximal 1000 MPa, bevorzugt maximal 800 MPa betragen kann. Die Zugfestigkeit kann insbesondere mindestens 300 MPa, vorzugsweise mindestens 380 MPa betragen. Die dritte Platine stellt im zu erzeugenden ersten Bauteil die zu erzeugende B-Säule unten bereit, wobei im mit dem zweiten Bauteil verbundenen Zustand die (vertikale) Erstreckung der B-Säule unten maximal der halben Erstreckung der gesamten B-Säule in der Seitenwandverstärkung entsprechen kann, insbesondere maximal einem Drittel. In der Seitenwandverstärkung kann die Erstreckung der B-Säule unten mindestens einem Zehntel der Erstreckung der gesamten B-Säule entsprechen. Bevorzugt kann die dritte Platine mindestens den zu erzeugenden sogenannten B-Säulenfuß in dem ersten Bauteil bereitstellen. Die Dicke der dritten Platine kann zwischen 0,8 und 2,2 mm betragen. Die Dicke kann insbesondere mindestens 0,9 mm, vorzugsweise mindestens 1,1 mm, bevorzugt mindestens 1,3 mm betragen. Die Dicke kann insbesondere maximal 2,0 mm, vorzugsweise maximal 1,8 mm, bevorzugt maximal 1,6 mm betragen. Die vierte Platine stellt im zu erzeugenden ersten Bauteil die zu erzeugende C-Säule unten bereit, wobei im mit dem zweiten Bauteil verbundenen Zustand die (vertikale) Erstreckung der C-Säule unten maximal der halben Erstreckung der gesamten C-Säule in der Seitenwandverstärkung entsprechen kann, insbesondere maximal einem Drittel, vorzugsweise maximal einem Viertel. In der Seitenwandverstärkung kann die Erstreckung der C-Säule unten mindestens einem Zehntel der Erstreckung der gesamten C-Säule entsprechen. Bevorzugt kann die vierte Platine mindestens den zu erzeugenden sogenannten C-Säulenfuß in dem ersten Bauteil bereitstellen. Die Dicke der vierten Platine kann zwischen 0,8 und 2,2 mm betragen. Die Dicke kann insbesondere mindestens 0,9 mm, vorzugsweise mindestens 1,1 mm, bevorzugt mindestens 1,3 mm betragen. Die Dicke kann insbesondere maximal 2,0 mm, vorzugsweise maximal 1,8 mm, bevorzugt maximal 1,6 mm betragen.

Bei dem vorzugsweise aus einem tailored welded blank gebildeten zweiten maßgeschneiderten Halbzeug kann die zweite Platine einen oberen Bereich der zu erzeugenden B-Säule in der mit dem ersten Bauteil verbundenen Seitenwandverstärkung ausbilden. Somit kann die zweite Platine den oberen Teil einer zu erzeugenden B-Säule als B-Säule oben im zweiten Bauteil bereitstellen, wobei im warmumgeformten Zustand die (vertikale) Erstreckung der B-Säule oben maximal 95 %, insbesondere maximal 85 %, vorzugsweise maximal 75 % der Erstreckung der gesamten B-Säule betragen kann. Im warmumgeformten Zustand kann die Erstreckung der B-Säule oben mindestens 50 % der Erstreckung der gesamten B-Säule entsprechen.

Bei einem vorzugsweise aus einem tailored welded blank gebildeten zweiten maßgeschneiderten Halbzeug kann eine dritte Platine einen oberen Bereich der zu erzeugenden C-Säule in der mit dem ersten Bauteil verbundenen Seitenwandverstärkung ausbilden. Somit kann die dritte Platine den oberen Teil einer zu erzeugenden C-Säule als C-Säule oben im zweiten Bauteil bereitstellen, wobei im warmumgeformten Zustand die (vertikale) Erstreckung der C-Säule oben maximal 95 %, insbesondere maximal 85 %, vorzugsweise maximal 75 % der Erstreckung der gesamten C-Säule betragen kann. Im warmumgeformten Zustand kann die Erstreckung der C-Säule oben mindestens 50 % der Erstreckung der gesamten C-Säule entsprechen.

Gemäß einer Ausgestaltung kann das erste Bauteil eine Standardgröße aufweisen. Somit kann dieses erste Bauteil als Basisbauteil für eine Fahrzeugplattform bereitgestellt werden. Das erste Bauteil kann mit einem zweiten Bauteil verbunden werden, welches eine Größe aufweist, um eine Seitenwandverstärkung für einen Kompaktwagen bereitzustellen. Ein Kompaktwagen ist ein Fünftürer, welcher als Limousine oder Kombi ausgeführt sein kann. Alternativ kann das erste Bauteil auch mit einem zweiten Bauteil verbunden werden, welches eine Größe aufweist, um eine Seitenwandverstärkung für einen SUV bereitzustellen. Ein SUV ist ein sogenannter Stadtgeländewagen oder eine Geländelimousine. Weiteralternativ kann das erste Bauteil auch mit einem zweiten Bauteil verbunden werden, welches eine Größe aufweist, um eine Seitenwandverstärkung für ein Coupe bereitzustellen.

Die Ermittlung einer Standardgröße für das erste Bauteil und der verschiedenen Größen der zweiten Bauteile für die unterschiedlichen Fahrzeugvarianten liegen im Rahmen des fachmännischen Könnens und können CAD- und/oder CAE-unterstützt entsprechend der jeweiligen Plattform ausgelegt werden.

Gemäß einer Ausgestaltung kann in mindestens einem Abschnitt des ersten maßgeschneiderten Halbzeug und/oder in mindestens einem Abschnitt des zweiten maßgeschneiderten Halbzeugs mindestens ein Verstärkungsblech, z.B. durch ein patchwork blank, angebunden werden, welches gemeinsam mit dem Halbzeug warmumgeformt wird.

Gemäß einer alternativen oder zusätzlichen Ausgestaltung kann in mindestens einem Abschnitt des mindestens ersten Bauteils und/oder in mindestens einem Abschnitt des mindestens zweiten Bauteils mindestens eine Verstärkung angebunden werden.

Gemäß einer alternativen oder zusätzlichen Ausgestaltung kann in mindestens einem Abschnitt der Seitenwandverstärkung mindestens eine Verstärkung angebunden werden.

Die erste und/oder zweite und/oder dritte und/oder vierte Platine für die bevorzugte Bereitstellung des ersten maßgeschneiderten Halbzeugs und die erste und/oder zweite und/oder dritte Platine für die bevorzugte Bereitstellung des zweiten maßgeschneiderten Halbzeugs bestehen aus einem Mangan-Stahlwerkstoff oder vorzugsweise aus einem Mangan-Bor-Stahlwerkstoff.

Die verwendeten Platinen mit den aufgeführten Zugfestigkeiten im warmumgeformten Zustand hängen im Wesentlichen vom Kohlenstoffgehalt der jeweiligen Stahlzusammensetzung ab, so dass der Anstieg der Zugfestigkeit im warmumgeformten Zustand im Wesentlichen mit einer Zunahme des Kohlenstoffgehalts im Stahlwerkstoff einhergeht.

Die erste und/oder zweite und/oder dritte und/oder vierte Platine für die Bereitstellung des ersten maßgeschneiderten Halbzeugs und die erste und/oder zweite und/oder dritte Platine für die Bereitstellung des zweiten maßgeschneiderten Halbzeugs können unbeschichtet sein.

Die erste und/oder zweite und/oder dritte und/oder vierte Platine für die Bereitstellung des ersten maßgeschneiderten Halbzeugs und die erste und/oder zweite und/oder dritte Platine für die Bereitstellung des zweiten maßgeschneiderten Halbzeugs können mit einem Überzug auf Aluminium-Basis umfassend oder bestehend aus einer Aluminiumlegierung beschichtet sein. Insbesondere kann der Überzug eine Zusammensetzung von 3 bis 12 Gew.-% Si, bis zu 4 Gew.-% Fe, optional bis zu 5 Gew.-% Mg und optional bis zu 15 Gew.-% Zn, Rest AI und unvermeidbare Verunreinigungen aufweisen. Vorzugsweise kann der Überzug eine Zusammensetzung 7 bis 12 Gew.-% Si, 1 bis 4 Gew.-% Fe, optional bis zu 1,5 Gew.-% Mg, Rest AI und unvermeidbare Verunreinigungen.

Die erste und/oder zweite und/oder dritte und/oder vierte Platine für die Bereitstellung des ersten maßgeschneiderten Halbzeugs und die erste und/oder zweite und/oder dritte Platine für die Bereitstellung des zweiten maßgeschneiderten Halbzeugs können alternativ mit einem Überzug auf Zink-Basis umfassend oder bestehend aus einer Zinklegierung beschichtet sein. Insbesondere kann der Überzug eine Zusammensetzung optional bis zu 5 Gew.-% Al, optional bis zu 5 Gew.-% Mg und optional bis zu 70 Gew.-% Fe, Rest Zn und unvermeidbare Verunreinigungen aufweisen. Vorzugsweise kann der Überzug eine Zusammensetzung bis 70 Gew.-% Fe, Rest Zn und unvermeidbare Verunreinigungen, wobei der Überzug eine Wärmebehandlung erfahren hat (galvannealed), um einen höheren Schmelzpunkt des Überzugs einzustellen, so dass dieser oberhalb der konventionellen Austenitisierung für das Warmumformen liegt.

Mindestens die erste Platine für die Bereitstellung des ersten maßgeschneiderten Halbzeugs kann mit einem Überzug auf Zink-Basis beschichtet sein. Die zweite und optional dritte und optional vierte Platine für die Bereitstellung des ersten maßgeschneiderten Halbzeugs kann entweder mit einem Überzug auf Zink-Basis oder mit einem Überzug auf Aluminium-Basis beschichtet sein und die erste und zweite und optional dritte Platine für die Bereitstellung des zweiten maßgeschneiderten Halbzeugs jeweils mit einem Überzug auf Aluminium-Basis beschichtet sein.

Die erste, zweite, optional dritte und optional vierte Platine für die Bereitstellung des ersten maßgeschneiderten Halbzeugs können unbeschichtet sein, wobei das erste maßgeschneiderte Halbzeug zu einem ersten Bauteil warmumgeformt wird und das erste Bauteil vor dem Verbinden mit dem zweiten Bauteil zur Erzeugung einer Seitenwandverstärkung mit Zink oder einer Zinklegierung beschichtet wird, beispielsweise mit Zink durch elektrolytisches Beschichten oder durch Auftrag von Zink-Lamellen.

Die erste und zweite und optional dritte Platine für die Bereitstellung des zweiten maßgeschneiderten Halbzeugs können unbeschichtet sein, wobei das zweite maßgeschneiderte Halbzeug zu einem zweiten Bauteil warmumgeformt wird und das zweite Bauteil vor dem Verbinden mit dem ersten Bauteil zur Erzeugung einer Seitenwandverstärkung mit Zink oder einer Zinklegierung beschichtet wird, beispielsweise mit Zink durch elektrolytisches Beschichten oder durch Auftrag von Zink-Lamellen.

Kommen beispielsweise zwei Seitenwandverstärkungen zur Anwendung, können entweder nur die innere Seitenwandverstärkung oder nur die äußere Seitenwandverstärkung oder auch beide Seitenwandverstärkungen erfindungsgemäß hergestellt werden.

In einer einfachen Ausgestaltung kann aus mindestens einem ersten Bauteil, welches mindestens eine A-Säule unten und einen Schweller und optional einen B-Säulenfuß umfasst, und mindestens einem zweiten Bauteil, welches mindestens eine A-Säule oben, einen Dachträger und eine B-Säule oder optional zur B-Säule eine B-Säule oben umfasst, eine Seitenwandverstärkung hergestellt werden. Diese Ausführung entspricht einem sogenannten "door-ring".

In einer weiteren Ausgestaltung kann aus mindestens einem ersten Bauteil, welches mindestens eine A-Säule unten und einen Schweller und optional einen B-Säulenfuß und optional einen C-Säulenfuß umfasst, und mindestens einem zweiten Bauteil, welches mindestens eine A-Säule oben, einen Dachträger, eine B-Säule oder optional zur B-Säule eine B-Säule oben und eine C-Säule oder optional zur C-Säule eine C-Säule oben umfasst, eine Seitenwandverstärkung hergestellt werden. Diese Ausführung entspricht einem sogenannten "double door-ring".

Unter A-, B- und C-Säulen sind Stützstrukturen an einem Fahrzeug u.a. zur Stabilisierung der Fahrgastzelle zu verstehen. Die A-Säule unten, welche im Wesentlichen vertikal im zusammengebauten Zustand hinter dem vorderen Radhaus angeordnet und zur Aufnahme der Türscharniere zur jeweiligen Aufnahme der Fahrer- bzw. Beifahrertür ausgelegt ist, geht in ihrem oberen Teilabschnitt in Richtung des Fahrzeughecks in die A-Säule oben und im weiteren Verlauf in den Dachträger über, wobei am Dachträger der obere Bereich der im Wesentlichen vertikal verlaufenden B-Säule verbunden ist. Gegenüberliegend zur A-Säule oben und zum Dachträger ist der Schweller im Bodenbereich des Fahrzeugs angeordnet, welcher sich vom vorderen zum hinteren Radhaus erstreckt, und welcher ausgehend von dem unteren Abschnitt der A-Säule unten im weiteren Verlauf in Richtung Fahrzeugheck mit dem unteren Abschnitt der B-Säule verbunden ist. Die C-Säule ist im unteren Bereich vor dem hinteren Radhaus mit dem Schweller und im oberen Bereich mit dem Dachträger verbunden.

Die Angabe "vertikal" und "waagerecht" bezieht sich auf den eingebauten Zustand im/am Fahrzeug, so dass eine eindeutige und unmissverständliche Zuordnung vorliegt. Die Bezeichnung "im Wesentlichen" lässt auch eine minimale Abweichung des Ausrichtung zwischen 0 und +/- 15° zur Vertikalen zu.

Gemäß einer weiteren Lehre betrifft die Erfindung eine Seitenwandverstärkung für ein Fahrzeug, insbesondere hergestellt nach dem erfindungsgemäßen Verfahren, wobei die Seitenwandverstärkung umfasst: - ein erstes Bauteil, welches warmumgeformt ist und entweder monolithisch ist oder aus unterschiedlicher Stahlzusammensetzung, unterschiedlicher Oberflächenbeschichtung und/oder unterschiedlicher Dicke besteht und mindestens eine A-Säule unten und einen Schweller für die Seitenwandverstärkung aufweist und - ein zweites Bauteil, welches warmumgeformt ist und entweder monolithisch ist oder aus unterschiedlicher Stahlzusammensetzung, unterschiedlicher Oberflächenbeschichtung und/oder unterschiedlicher Dicke besteht und mindestens eine A-Säule oben, einen Dachträger und eine B-Säule aufweist, wobei einander gegenüberliegende Enden der Bauteile einander anstoßen oder überlappen und am Stumpfstoß oder im Überlapp miteinander verbunden sind.

Weitere Ausgestaltungen der Seitenwandverstärkung sind in den Ansprüchen 12 bis 15 beschrieben. Um Wiederholungen zu vermeiden, wird auf die entsprechenden Ausführungen zum Verfahren verwiesen. Alle Ausführungen betreffend die Ausgestaltungen des Verfahrens sind auch auf die Seitenwandverstärkung anwendbar und damit offenbart, insbesondere entsprechend kombinierbar.

Im Folgenden wird die Erfindung anhand einer Ausführungsbeispiele darstellenden Zeichnung näher erläutert. Gleiche Teile sind mit gleichen Bezugsziffern versehen. Es zeigt
- Figur 1:: ein erstes und ein zweites maßgeschneidertes Halbzeug für die Warmumformung von Bauteilen und der Herstellung einer Seitenwandverstärkung durch Verbinden der warmumgeformten Bauteile in einer ersten Ausführung, und
- Figur 2:: ein erstes und ein zweites maßgeschneidertes Halbzeug für die Warmumformung von Bauteilen und der Herstellung einer Seitenwandverstärkung durch Verbinden der warmumgeformten Bauteile in einer zweiten Ausführung und
- Figur 3:: drei Seitenwandverstärkungen für unterschiedliche Fahrzeug-Versionen.

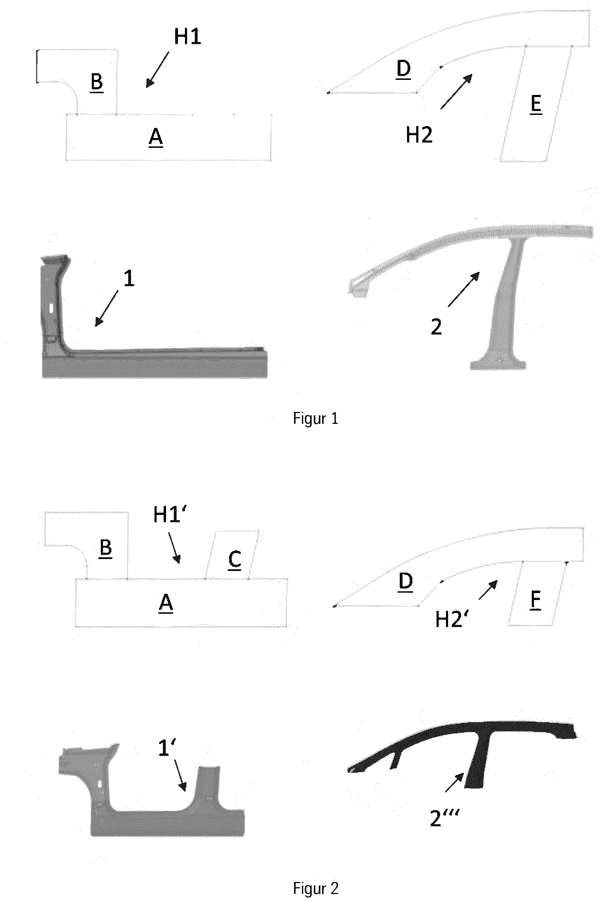

**Figur 1** zeigt in der oberen Darstellung links ein erstes maßgeschneidertes Halbzeug (H1) und rechts ein zweites maßgeschneidertes Halbzeug (H2). Das erste maßgeschneiderte Halbzeug (H1) besteht vorzugsweise aus einem tailored welded blank und umfasst mehrere miteinander verbundene Platinen (A, B) mit unterschiedlicher Stahlzusammensetzung, unterschiedlicher Oberflächenbeschichtung und/oder unterschiedlicher Dicke. Das zweite maßgeschneiderte Halbzeug (H2) besteht vorzugsweise aus einem tailored welded blank und umfasst mehrere miteinander verbundene Platinen (D, E) mit unterschiedlicher Stahlzusammensetzung, unterschiedlicher Oberflächenbeschichtung und/oder unterschiedlicher Dicke.

Eine erste Platine (A) im ersten maßgeschneiderten Halbzeug (H1) besteht vorzugsweise aus einem Mangan-Bor-Stahlwerkstoff, weist entweder eine Dicke zwischen 1,2 und 2,0 mm mit einer im warmumgeformten Zustand betragende Zugfestigkeit zwischen größer 1300 und 1700 MPa oder eine Dicke zwischen 0,8 und 1,6 mm mit einer im warmumgeformten Zustand betragende Zugfestigkeit zwischen größer 1700 und 2200 MPa auf. Die erste Platine (A) ist im Bereich des zu erzeugenden Schwellers angeordnet.

Eine zweite Platine (B) im ersten maßgeschneiderten Halbzeug (H1) besteht vorzugsweise aus einem Mangan-Bor-Stahlwerkstoff, weist entweder eine Dicke zwischen 1,2 und 2,5 mm mit einer im warmumgeformten Zustand betragende Zugfestigkeit zwischen größer 1300 und 1700 MPa oder eine Dicke zwischen 1,0 und 2,0 mm mit einer im warmumgeformten Zustand betragende Zugfestigkeit zwischen größer 1700 und 2200 MPa auf. Die zweite Platine (B) ist im Bereich der zu erzeugenden A-Säule unten angeordnet und im Stumpfstoß oder überlappend mit der ersten Platine (A) verbunden.

Eine erste Platine (D) im zweiten maßgeschneiderten Halbzeug (H2) besteht vorzugsweise aus einem Mangan-Bor-Stahlwerkstoff, weist entweder eine Dicke zwischen 1,2 und 2,0 mm mit einer im warmumgeformten Zustand betragende Zugfestigkeit zwischen größer 1300 und 1700 MPa oder eine Dicke zwischen 0,8 und 1,6 mm mit einer im warmumgeformten Zustand betragende Zugfestigkeit zwischen größer 1700 und 2200 MPa auf. Die erste Platine (D) ist im Bereich der zu erzeugenden A-Säule oben und des zu erzeugenden Schwellers angeordnet.

Eine zweite Platine (E) im zweiten maßgeschneiderten Halbzeug (H2) besteht vorzugsweise aus einem Mangan-Bor-Stahlwerkstoff, weist entweder eine Dicke zwischen 1,2 und 2,2 mm mit einer im warmumgeformten Zustand betragende Zugfestigkeit zwischen größer 1300 und 1700 MPa oder eine Dicke zwischen 0,8 und 1,8 mm mit einer im warmumgeformten Zustand betragende Zugfestigkeit zwischen größer 1700 und 2200 MPa auf. Die zweite Platine (E) ist im Bereich der zu erzeugenden B-Säule angeordnet und im Stumpfstoß oder überlappend mit der ersten Platine (D) verbunden.

Die einzelnen Platinen (A, B, D, E) können entweder mit einem Überzug auf Zink-Basis oder vorzugsweise mit einem Überzug auf Aluminium-Basis beschichtet sein. Alternativ wäre auch denkbar, dass sie unbeschichtet ausgeführt sein können.

Mittels bekannter Warmumformung, bevorzugt mittels Warmpresshärtens, wird das erste maßgeschneiderte Halbzeug (H1) zu einem ersten Bauteil (1) und das zweite maßgeschneiderte Halbzeug (H2) zu einem zweiten Bauteil (2) umgeformt.

Hier nicht dargestellt, kann vor, während oder nach der Warmumformung des zweiten maßgeschneiderten Halbzeugs (H1) zumindest im Bereich im unteren Abschnitt der zu erzeugenden B-Säule, somit im B-Säulenfuß im zweiten Bauteil (2) vorzugsweise ein "tailored tempering" durchgeführt werden, um in diesem Abschnitt eine im Vergleich zum restlichen Teil der zu erzeugenden B-Säule geringere Zugfestigkeit einzustellen. Dieser Abschnitt kann eine Zugfestigkeit zwischen 200 und 1500 MPa aufweisen.

Zur Herstellung einer Seitenwandverstärkung werden die beiden warmumgeformten Bauteile (1, 2) miteinander verbunden. Dabei werden insbesondere der untere Abschnitt der A-Säule oben des zweiten Bauteils (2) mit dem oberen Abschnitt der A-Säule unten des ersten Bauteils (1) zum einen und der untere Abschnitt der B-Säule des zweiten Bauteils (2) mit einem Abschnitt des Schwellers des ersten Bauteils (1) zum anderen miteinander verbunden, vorzugsweise jeweils überlappend, bevorzugt mittels Widerstandschweißen.

**Figur 2** zeigt in der oberen Darstellung links ein erstes maßgeschneidertes Halbzeug (H1') und rechts ein zweites maßgeschneidertes Halbzeug (H2'). Das erste maßgeschneiderte Halbzeug (H1`) besteht vorzugsweise aus einem tailored welded blank und umfasst mehrere miteinander verbundene Platinen (A, B, C) mit unterschiedlicher Stahlzusammensetzung, unterschiedlicher Oberflächenbeschichtung und/oder unterschiedlicher Dicke. Das zweite maßgeschneiderte Halbzeug (H2') besteht vorzugsweise aus einem tailored welded blank und umfasst mehrere miteinander verbundene Platinen (D, F) mit unterschiedlicher Stahlzusammensetzung, unterschiedlicher Oberflächenbeschichtung und/oder unterschiedlicher Dicke.

Eine erste Platine (A) im ersten maßgeschneiderten Halbzeug (H1') besteht vorzugsweise aus einem Mangan-Bor-Stahlwerkstoff, weist entweder eine Dicke zwischen 1,2 und 2,0 mm mit einer im warmumgeformten Zustand betragende Zugfestigkeit zwischen größer 1400 und 1700 MPa oder eine Dicke zwischen 0,8 und 1,6 mm mit einer im warmumgeformten Zustand betragende Zugfestigkeit zwischen größer 1700 und 2200 MPa auf. Die erste Platine (A) ist im Bereich des zu erzeugenden Schwellers angeordnet.

Eine zweite Platine (B) im ersten maßgeschneiderten Halbzeug (H1') besteht vorzugsweise aus einem Mangan-Bor-Stahlwerkstoff, weist entweder eine Dicke zwischen 1,2 und 2,5 mm mit einer im warmumgeformten Zustand betragende Zugfestigkeit zwischen größer 1400 und 1700 MPa oder eine Dicke zwischen 1,0 und 2,0 mm mit einer im warmumgeformten Zustand betragende Zugfestigkeit zwischen größer 1700 und 2200 MPa auf. Die zweite Platine (B) ist im Bereich der zu erzeugenden A-Säule unten angeordnet und im Stumpfstoß oder überlappend mit der ersten Platine (A) verbunden.

Eine dritte Platine (C) im ersten maßgeschneiderten Halbzeug (H1') besteht vorzugsweise aus einem Mangan-Bor-Stahlwerkstoff, und weist eine Dicke zwischen 0,8 und 2,0 mm mit einer im warmumgeformten Zustand betragende Zugfestigkeit zwischen bevorzugt 380 und 1500 MPa auf. Die dritte Platine (C) ist im Bereich der zu erzeugenden B-Säule unten angeordnet und im Stumpfstoß oder überlappend mit der ersten Platine (A) verbunden.

Eine erste Platine (D) im zweiten maßgeschneiderten Halbzeug (H2') besteht vorzugsweise aus einem Mangan-Bor-Stahlwerkstoff, weist entweder eine Dicke zwischen 1,0 und 2,2 mm mit einer im warmumgeformten Zustand betragende Zugfestigkeit zwischen größer 1400 und 1700 MPa oder eine Dicke zwischen 0,8 und 1,8mm mit einer im warmumgeformten Zustand betragende Zugfestigkeit zwischen größer 1700 und 2200 MPa auf. Die erste Platine (D) ist im Bereich der zu erzeugenden A-Säule oben und des zu erzeugenden Schwellers angeordnet. Eine zweite Platine (F) im zweiten maßgeschneiderten Halbzeug (H2') besteht vorzugsweise aus einem Mangan-Bor-Stahlwerkstoff, weist entweder eine Dicke zwischen 1,2 und 2,0 mm mit einer im warmumgeformten Zustand betragende Zugfestigkeit zwischen größer 1400 und 1700 MPa oder eine Dicke zwischen 0,8 und 1,6 mm mit einer im warmumgeformten Zustand betragende Zugfestigkeit zwischen größer 1700 und 2200 MPa auf. Die zweite Platine (F) ist im Bereich der zu erzeugenden B-Säule oben angeordnet und im Stumpfstoß oder überlappend mit der ersten Platine (D) verbunden.

Die einzelnen Platinen (A, B, C, D, F) können entweder mit einem Überzug auf Zink-Basis oder vorzugsweise mit einem Überzug auf Aluminium-Basis beschichtet sein. Alternativ wäre auch denkbar, dass sie unbeschichtet ausgeführt sein können.

Mittels bekannter Warmumformung, bevorzugt mittels Warmpresshärtens, wird das erste maßgeschneiderte Halbzeug (H1') zu einem ersten Bauteil (1') und das zweite maßgeschneiderte Halbzeug (H2') zu einem zweiten Bauteil (2‴) umgeformt.

Zur Herstellung einer Seitenwandverstärkung werden die beiden warmumgeformten Bauteile (1', 2‴) miteinander verbunden. Dabei werden insbesondere der untere Abschnitt der A-Säule oben des zweiten Bauteils (2‴) mit dem oberen Abschnitt der A-Säule unten des ersten Bauteils (1') zum einen und der untere Abschnitt der B-Säule oben des zweiten Bauteils (2‴) mit einem oberen Abschnitt der B-Säule unten des ersten Bauteils (1') zum anderen miteinander verbunden, vorzugsweise jeweils überlappend, bevorzugt mittels Widerstandschweißen.

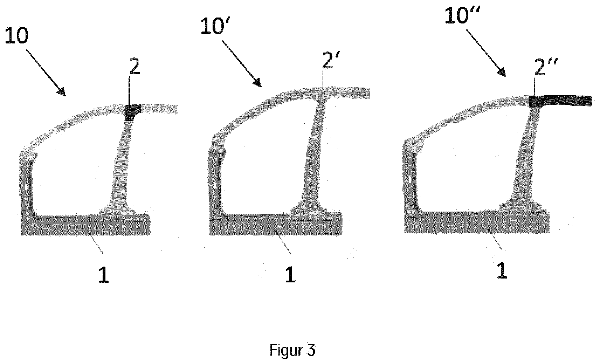

**Figur 3** zeigt drei verschiedene Seitenwandverstärkungen (10, 10', 10"), wobei alle Varianten für Schweller und A-Säule das gleiche erste Bauteil (1) mit einer für die jeweilige Plattform übliche Standardgröße nutzen. Das zweite Bauteil (2), welches den Dachrahmen und die B-Säule bereitstellt, muss individuell mit einer Größe hergestellt werden, von links nach rechts wie folgt:
- eine Kompaktwagen-Variante, Fünftürer als Kombi oder Limousine, stellt die Standardvariante dar, wobei die Abmessungen als Basis für die jeweilige Plattform dient,
- eine SUV-Variante besitzt eine höhere B-Säule, wobei der Dachrahmen höher und somit in der Höhe stärker gekrümmt ist als der Dachrahmen im Vergleich zur Kompaktwagen-Variante,
- eine Coupe-Variante, besitzt eine kürzere B-Säule, welche in Fahrzeugrichtung im Vergleich zur Kompaktwagen-Variante weiter hinten platziert, um ein Package eines Coupes mit größeren Türen zu ermöglichen. Dies führt zu einer geringeren Höhe, so dass der Dachrahmen in der Höhe auch geringer gekrümmt ist als der Dachrahmen im Vergleich zur Kompaktwagen-Variante.

Kommen beispielsweise zwei Seitenwandverstärkungen zur Anwendung, können entweder nur die innere Seitenwandverstärkung (10, 10', 10") oder nur die äußere Seitenwandverstärkung (10, 10', 10") oder auch beide Seitenwandverstärkungen (10, 10', 10") erfindungsgemäß hergestellt werden.

Die Figuren 1 bis 3 zeigen sogenannte "door-ring" Ausführungen. Selbstverständlich umfasst die Erfindung auch sogenannte "double door-ring" Ausführungen, wobei in der Seitenwandverstärkung zusätzlich eine C-Säule vorgesehen ist, welche entweder als C-Säule über das zweite Halbzeug respektive über das zweite Bauteil, hier nicht dargestellt, oder als C-Säule unten über das erste Halbzeug respektive über das erste Bauteil und als C-Säule oben über das zweite Halbzeug respektive über das zweite Bauteil, hier nicht dargestellt, bereitgestellt werden kann.

Nicht dargestellt ist, dass das erste Bauteil aus einer ersten Blech und das zweite Bauteil aus einem zweiten Blech warmumgeformt werden können. Auch können das erste Bauteil aus einem ersten Blech und das zweite Bauteil aus einem zweiten maßgeschneiderten Halbzeug warmumgeformt werden. Des Weiteren können auch das erste Bauteil aus einem ersten maßgeschneiderten Halbzeug und das zweite Bauteil aus einem zweiten Blech warmumgeformt werden.

Nicht dargestellt, können lokale Verstärkungen zur Anwendung kommen. So zum Beispiel in kann mindestens ein Verstärkungsblech in mindestens einem Abschnitt des ersten maßgeschneiderten Halbzeug (H1, H1`) und/oder in mindestens einem Abschnitt des zweiten maßgeschneiderten Halbzeugs (H2, H2') mindestens angebunden werden, welches gemeinsam mit dem Halbzeug (H1, H1`, H2, H2') warmumgeformt wird. Alternativ oder zusätzlich kann auch mindestens eine Verstärkung in mindestens einem Abschnitt des mindestens ersten Bauteils (1, 1') und/oder in mindestens einem Abschnitt des mindestens zweiten Bauteils (2, 2', 2", 2‴) angebunden werden. Alternativ oder zusätzlich kann auch mindestens eine Verstärkung in mindestens einem Abschnitt der Seitenwandverstärkung (10, 10', 10") angebunden werden.

## Patentansprüche

1. Verfahren zur Herstellung einer Seitenwandverstärkung (10, 10', 10") umfassend folgende Schritte:
- Bereitstellen mindestens eines ersten Bauteils (1, 1'), welches aus einem ersten Blech oder aus einem ersten maßgeschneiderten Halbzeug (H1, H1`) mit unterschiedlicher Stahlzusammensetzung, unterschiedlicher Oberflächenbeschichtung und/oder unterschiedlicher Dicke, warmumgeformt worden ist und mindestens eine A-Säule unten und einen Schweller für die Seitenwandverstärkung (10, 10', 10") bereitstellt;
- Bereitstellen mindestens eines zweiten Bauteils (2, 2', 2", 2‴), welches aus einem zweiten Blech oder aus einem zweiten maßgeschneiderten Halbzeug (H2, H2') mit unterschiedlicher Stahlzusammensetzung, unterschiedlicher Oberflächenbeschichtung und/oder unterschiedlicher Dicke, warmumgeformt worden ist und mindestens eine A-Säule oben, einen Dachträger und eine B-Säule für die Seitenwandverstärkung (10, 10', 10") bereitstellt;
- Verbinden der mindestens zwei Bauteile (1, 1', 2, 2', 2", 2‴) zur Erzeugung der Seitenwandverstärkung (10, 10', 10").

2. Verfahren nach Anspruch 1, wobei das erste maßgeschneiderte Halbzeug (H1, H1') in mindestens einem Teilabschnitt der bereitzustellenden A-Säule unten eine Stahlzusammensetzung umfasst, welche im warmumgeformten Zustand eine Zugfestigkeit von größer 950 bis 2200 MPa aufweist.

3. Verfahren nach einem der vorgenannten Ansprüche, wobei das erste maßgeschneiderte Halbzeug (H1, H1`) in mindestens einem Teilabschnitt des bereitzustellenden Schwellers eine Stahlzusammensetzung umfasst, welche im warmumgeformten Zustand eine Zugfestigkeit von größer 1300 bis 2200 MPa aufweist.

4. Verfahren nach einem der vorgenannten Ansprüche, wobei das zweite maßgeschneiderte Halbzeug (H2, H2') in mindestens einem Teilabschnitt der bereitzustellenden A-Säule oben und des bereitzustellenden Dachträgers eine Stahlzusammensetzung umfasst, welche im warmumgeformten Zustand eine Zugfestigkeit von größer 1300 bis 2200 MPa aufweist.

5. Verfahren nach einem der vorgenannten Ansprüche, wobei das zweite maßgeschneiderte Halbzeug (H2, H2') in mindestens einem Teilabschnitt der bereitzustellenden B-Säule eine Stahlzusammensetzung umfasst, welche im warmumgeformten Zustand eine Zugfestigkeit von größer 950 bis 2200 MPa aufweist.

6. Verfahren nach einem der vorgenannten Ansprüche, wobei das erste Bauteil (1') aus einem ersten maßgeschneiderten Halbzeug (H1`) mit unterschiedlicher Stahlzusammensetzung, unterschiedlicher Oberflächenbeschichtung und/oder unterschiedlicher Dicke, warmumgeformt worden ist, welches neben der A-Säule unten und dem Schweller zusätzlich einen Teilabschnitt einer B-Säule als B-Säule unten für die Seitenwandverstärkung bereitstellt und das zweite Bauteil (2‴) aus einem zweiten maßgeschneiderten Halbzeug (H2') mit unterschiedlicher Stahlzusammensetzung, unterschiedlicher Oberflächenbeschichtung und/oder unterschiedlicher Dicke, warmumgeformt worden ist, welches die A-Säule oben, den Dachträger und einen Teilabschnitt einer B-Säule als B-Säule oben für die Seitenwandverstärkung bereitstellt, wobei sich durch das Verbinden der beiden Bauteile (1', 2‴) die B-Säule unten des ersten Bauteils (1') mit der B-Säule oben des zweiten Bauteils (2‴) eine B-Säule in der Seitenwandverstärkung ergibt.

7. Verfahren nach einem der vorgenannten Ansprüche, wobei das erste Bauteil (1) eine Standardgröße aufweist, welches
- mit einem zweiten Bauteil (2) verbunden wird, welches eine Größe aufweist, um eine Seitenwandverstärkung (10) für einen Kompaktwagen bereitzustellen, oder welches
- mit einem zweiten Bauteil (2') verbunden wird, welches eine Größe aufweist, um eine Seitenwandverstärkung (10') für einen SUV bereitzustellen, oder welches
- mit einem zweiten Bauteil (2") verbunden wird, welches eine Größe aufweist, um eine Seitenwandverstärkung (10") für ein Coupe bereitzustellen.

8. Verfahren nach einem der vorgenannten Ansprüche, wobei in mindestens einem Abschnitt des ersten maßgeschneiderten Halbzeugs (H1, H1`) und/oder in mindestens einem Abschnitt des zweiten maßgeschneiderten Halbzeugs (H2, H2') mindestens ein Verstärkungsblech angebunden wird, welches gemeinsam mit dem Halbzeug (H1, H1`, H2, H2') warmumgeformt wird.

9. Verfahren nach einem der vorgenannten Ansprüche, wobei in mindestens einem Abschnitt des mindestens ersten Bauteils (1, 1') und/oder in mindestens einem Abschnitt des mindestens zweiten Bauteils (2, 2', 2", 2‴) mindestens eine Verstärkung angebunden wird.

10. Verfahren nach einem der vorgenannten Ansprüche, wobei in mindestens einem Abschnitt der Seitenwandverstärkung (10, 10', 10") mindestens eine Verstärkung angebunden wird.

11. Seitenwandverstärkung (10; 10';10") für ein Fahrzeug, insbesondere hergestellt nach einem der vorgenannten Ansprüche, wobei die Seitenwandverstärkung (10; 10';10") umfasst:
- ein erstes Bauteil (1, 1 '), welches warmumgeformt ist und entweder monolithisch ist oder aus unterschiedlicher Stahlzusammensetzung, unterschiedlicher Oberflächenbeschichtung und/oder unterschiedlicher Dicke besteht und mindestens eine A-Säule unten und einen Schweller für die Seitenwandverstärkung (10) aufweist und
- ein zweites Bauteil (2, 2', 2", 2‴), welches warmumgeformt ist und entweder monolithischen ist oder aus unterschiedlicher Stahlzusammensetzung, unterschiedlicher Oberflächenbeschichtung und/oder unterschiedlicher Dicke besteht und mindestens eine A-Säule oben, einen Dachträger und eine B-Säule aufweist, wobei einander gegenüberliegende Enden der Bauteile (1, 1', 2, 2', 2", 2‴) einander ansto-ßen oder überlappen und am Stumpfstoß oder im Überlapp miteinander verbunden sind.

12. Seitenwandverstärkung nach Anspruch 11, wobei in mindestens einem Teilabschnitt der der A-Säule unten eine Stahlzusammensetzung umfasst, welche im warmumgeformten Zustand eine Zugfestigkeit von größer 950 bis 2200 MPa aufweist.

13. Seitenwandverstärkung nach Anspruch 11 oder 12, wobei in mindestens einem Teilabschnitt des Schwellers eine Stahlzusammensetzung umfasst, welche im warmumgeformten Zustand eine Zugfestigkeit von größer 1300 bis 2200 MPa aufweist.

14. Seitenwandverstärkung nach einem der Ansprüche 11 bis 13, wobei in mindestens einem Teilabschnitt der A-Säule oben und des Dachträgers eine Stahlzusammensetzung umfasst, welche im warmumgeformten Zustand eine Zugfestigkeit von größer 1300 bis 2200 MPa aufweist.

15. Seitenwandverstärkung nach einem der Ansprüche 11 bis 14, wobei in mindestens einem Teilabschnitt der B-Säule eine Stahlzusammensetzung umfasst, welche im warmumgeformten Zustand eine Zugfestigkeit von größer 950 bis 2200 MPa aufweist.
